# FASCICULE DE BREVET EUROPEEN

(11) **EP 3 514 614 B1**
(45) Date de publication et mention de la délivrance du brevet: **28.07.2021**
(21) Numéro de dépôt: 19152091.5
(22) Date de dépôt: 16.01.2019
(51) Int. Cl.: G02F 1/01

(54) **DISPOSITIF OPTIQUE**
OPTISCHE VORRICHTUNG
OPTICAL DEVICE

(30) Priorité: 18.01.2018 FR 1850411
(43) Date de publication de la demande: 24.07.2019
(73) Titulaire: Commissariat à l'énergie atomique et aux énergies alternatives, 75015 Paris (FR)
(72) Inventeur: CASSET, Fabrice, 38570 TENCIN (FR); HILT, Thierry, 38660 LA TERRASSE (FR)
(74) Mandataire: Brevalex

(56) Documents cités:
- US-A- 4 454 418
- US-A1- 2004 096 155
- NASER HOSSEINI ET AL: "Stress-optic modulator in TriPleX platform using a piezoelectric lead zirconate titanate (PZT) thin film", OPTICS EXPRESS, vol. 23, no. 11, 19 mai 2015 (2015-05-19), page 14018, XP055403201, DOI: 10.1364/OE.23.014018
- GHOSH SIDDHARTHA ET AL: "Laterally vibrating resonator based elasto-optic modulation in aluminum nitride", APL PHOTONICS, AMERICAN INSTITUTE OF PHYSICS, 2 HUNTINGTON QUADRANGLE, MELVILLE, NY 11747, vol. 1, no. 3, 1 juin 2016 (2016-06-01), XP012208179, DOI: 10.1063/1.4945356

## Description

### DOMAINE TECHNIQUE

La présente invention concerne un dispositif optique pourvu d'un guide d'onde et d'un actionneur destiné à en modifier l'indice de réfraction. En particulier, la présente invention concerne un agencement de l'actionneur permettant d'exercer une contrainte plus importante sur le guide d'onde comparativement aux agencements connus de l'état de la technique.

### ART ANTÉRIEUR

L'essor des technologies optiques ne fait aujourd'hui aucun doute. Ces dernières permettent de répondre à des demandes de dispositifs optiques de plus en plus performants, notamment des Imageurs ou des LIDAR (« Light Détection And Ranging systems »).

De tels dispositifs sont généralement pourvus de guides d'onde destinés à guider des rayonnements lumineux vers une cible.

En particulier, les rayonnements lumineux doivent balayer les surfaces des cibles afin de les détecter et/ou d'en reconstituer une image.

Par exemple, un dispositif LIDAR peut être mis en œuvre, par exemple à bord d'un véhicule autonome, pour imager une scène (en d'autres termes une zone) d'environ 38 x 10 m².

A cet égard, ces dispositifs comprennent également des moyens de déflexion des rayonnements lumineux afin d'induire un angle de balayage auxdits rayonnements lumineux. La détection du signal réfléchit permet alors de détecter la présence d'éventuels obstacles.

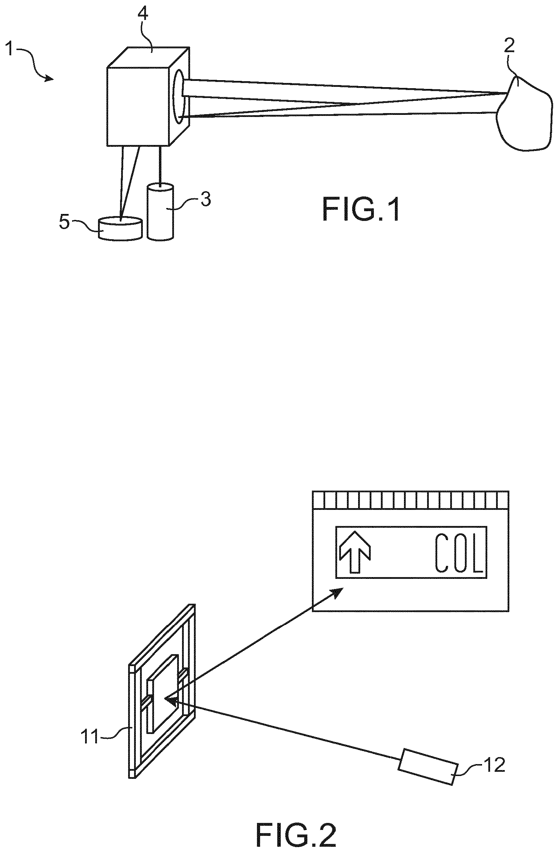

La figure 1 est un schéma représentatif du fonctionnement d'un LIDAR 1 pour la détection d'un objet 2.

En particulier, le LIDAR 1 comprend une source de rayonnement lumineux 3, notamment un LASER, un ensemble opto-mécanique 4 destiné à induire un angle de balayage au rayonnement lumineux, et un détecteur 5 destiné à collecter le rayonnement lumineux réfléchit par l'objet 2.

Dans la pratique, les guides d'onde des dispositifs optiques sont formés selon des technologies issues des techniques de micro fabrication, et notamment mettent en œuvre les technologies silicium. En particulier, les guides d'onde peuvent comprendre du nitrure de silicium.

Dans pareil cas de figure, la déflexion d'un rayonnement lumineux peut faire appel à différentes solutions techniques.

Ainsi, pour assurer la déflexion d'un rayonnement lumineux guidé par un tel guide d'onde, il a été proposé, dans le document [1] cité à la fin de la description, de mettre en œuvre un effet thermo-optique via une résistance chauffante intégrée à proximité du guide d'onde.

L'échauffement d'un guide d'onde par la résistance chauffante permet d'induire une variation de l'indice de réfraction du guide d'onde, et ainsi générer un déphasage du rayonnement lumineux guidé par ledit guide d'onde.

Cependant, cette solution technique, dès lors qu'elle induit une consommation d'énergie importante, n'est pas satisfaisante.

De manière alternative, des diodes PIN (décrites dans le document [2] cité à la fin de la description), destinées à injecter des porteurs libres dans le ou les guides d'onde afin d'en modifier l'indice de réfraction ont également été considérées.

Toutefois, le coût associé à la fabrication de diodes PIN est trop important pour rendre cette alternative compatible avec les requis de l'industrie photonique.

Toujours de manière alternative, et tel que représenté à la figure 2, un miroir de déflexion 11 du rayonnement lumineux émis par un laser 12 peut être mis en œuvre.

Cependant, l'intégration d'un tel miroir est difficile sur le plan technologique et représente également un coût qui n'est pas compatible avec les requis de l'industrie photonique.

Par conséquent, cette alternative n'est pas non plus satisfaisante.

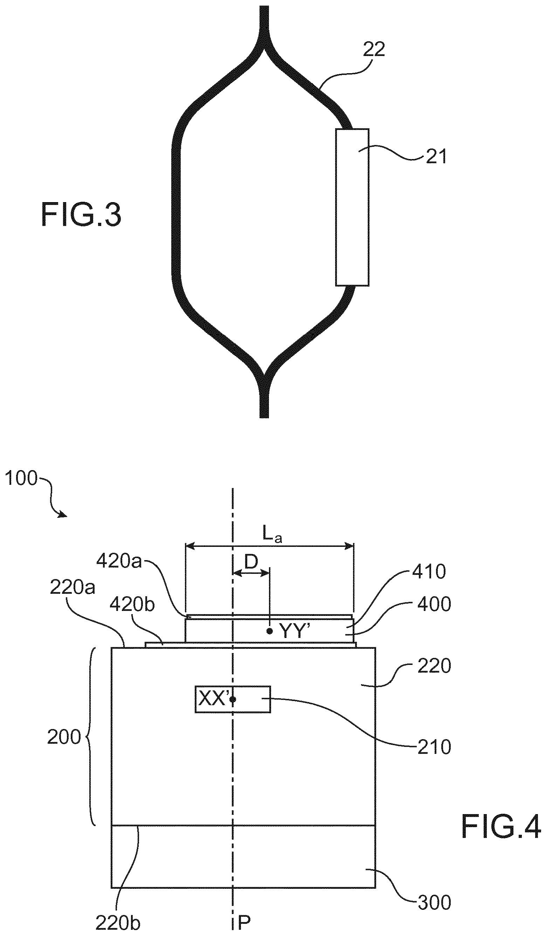

Enfin, une dernière solution technique, représentée à la figure 3 et décrite dans les documents [3] et [4] cités à la fin de la description, a également été envisagée.

Cette dernière solution est basée sur l'application d'une contrainte dans le guide d'onde via un actionneur piézoélectrique, afin d'en modifier l'indice de réfraction.

Cette solution technique, bien qu'intéressante, ne permet d'atteindre que de relativement faibles contraintes dans le guide d'onde.

Le document US 2004/096155 divulgue un coupleur de polarisation intégré.

Un but de la présente invention est alors de proposer un dispositif optique pourvu d'un guide d'onde et d'un actionneur permettant d'exercer de plus fortes contraintes dans le guide d'onde et par voie de conséquences de plus fortes variations d'indice de réfraction.

### EXPOSÉ DE L'INVENTION

Le but de la présente invention est, au moins en partie, atteint par un dispositif optique comprenant :
- un guide d'onde comprenant un cœur s'étendant selon un premier axe de symétrie XX', et encapsulé dans une couche gaine pourvue de deux faces principales essentiellement parallèles dites, respectivement, face avant et face arrière,
- un actionneur d'une largeur Lₐ, disposé sur la face avant, chevauchant au moins en partie le cœur, et s'étendant selon un second axe de symétrie YY' essentiellement parallèle au premier axe de symétrie XX', dès lors qu'il est soumis à un champ électrique, est destiné à imposer une contrainte mécanique au niveau du cœur afin d'en modifier l'indice de réfraction
le second axe de symétrie YY' est décalé latéralement selon un décalage, dit décalage latéral, par rapport à un plan de symétrie du guide d'onde comprenant le premier axe de symétrie et perpendiculaire aux faces principales de la couche gaine, et en ce que le décalage latéral est compris entre 15 % et 50% de la largeur Lₐ.

Selon un mode de mise en œuvre, le rapport entre la largeur Lₐ et la largeur du cœur est compris entre 8 et 100, avantageusement entre 15 et 100, encore plus avantageusement entre 30 et 100.

Selon un mode de mise en œuvre, la largeur Lₐ est comprise entre 5 µm et 60 µm, avantageusement entre 10 µm et 60 µm, encore plus avantageusement entre 20 µm et 60 µm.

Selon un mode de mise en œuvre, l'actionneur comprend un premier matériau disposé entre deux électrodes destinées à soumettre ledit actionneur au champ électrique, le premier matériau comprenant un matériau piézoélectrique ou un matériau ferroélectrique ou un matériau électrostrictif.

Selon un mode de mise en œuvre, le premier matériau comprend au moins des éléments choisi parmi : Titano-Zirconate de Plomb, nitrure d'aluminium, oxyde de zinc, poly(fluorure de vinylidène), niobiate de lithium (LNO pour LiNbO₃), BaTiO₃, PBTiO₃.

Selon un mode de mise en œuvre, le guide d'onde présente une épaisseur comprise entre 1 µm et 3µm.

Selon un mode de mise en œuvre, la couche gaine comprend du dioxyde de silicium.

Selon un mode de mise en œuvre, le cœur comprend du nitrure de silicium.

Selon un mode de mise en œuvre, le guide d'onde repose par sa face arrière sur un substrat support, avantageusement le substrat support comprend du silicium.

L'invention concerne également un détecteur optique mettant en œuvre au moins un dispositif optique selon la présente invention.

### BRÈVE DESCRIPTION DES DESSINS

D'autres caractéristiques et avantages apparaîtront dans la description qui va suivre d'un dispositif optique selon l'invention, donnés à titre d'exemples non limitatifs, en référence aux dessins annexés dans lesquels :
- la figure 1 est un schéma représentatif du fonctionnement d'un LIDAR pour la détection d'un objet ;
- la figure 2 est un schéma représentatif de la mise en œuvre d'un miroir pour la déflexion d'un rayonnement lumineux selon des techniques connues de l'homme du métier;
- la figure 3 est un schéma représentatif de la mise en œuvre d'un actionneur piézoélectrique pour la génération d'une contrainte au niveau d'un guide d'onde afin d'en modifier l'indice de réfraction selon des techniques connues de l'homme du métier;
- la figure 4 est une vue en coupe du dispositif optique selon l'invention, selon un plan de coupe perpendiculaire aux faces avant et arrière de la couche gaine ;
- la figure 5 est une représentation graphique de la contrainte mécanique (axe verticale, contrainte de Von Mises en Mpa,) en fonction du décalage latéral D (axe horizontale, en µm) obtenue par simulation par élément finis ;
- les figures 6a à 6c sont une représentation schématique des différentes étapes d'un procédé adapté à la formation du dispositif optique selon la présente invention.

### EXPOSÉ DÉTAILLÉ DE MODES DE RÉALISATION PARTICULIERS

L'invention décrite de manière détaillée ci-dessous concerne un dispositif optique qui comprend un guide d'onde sur lequel est formé un actionneur. Ledit actionneur, dès lors qu'il est soumis à un champ électrique, est destiné à imposer une contrainte mécanique au niveau du cœur afin d'en modifier l'indice de réfraction.

Notamment, l'actionneur est décalé latéralement, selon un décalage dit décalage latéral compris dans une gamme prédéfinie. En particulier, le décalage latéral permet d'amplifier de manière inattendue le niveau de contrainte imposé au cœur du guide d'onde.

A la figure 4, on peut voir un exemple de dispositif optique 100 selon la présente invention.

Notamment, le dispositif optique 100 comprend un guide d'onde 200.

Le guide d'onde 200 comprend en particulier un cœur 210 encapsulé dans une couche gaine 220.

Par « encapsulé », on entend compris dans le volume de la couche gaine 220.

Il est entendu, au sens de la présente invention, que le cœur 210 présente un indice de réfraction n_{c} supérieur à l'indice de réfraction n_{g} de la couche gaine 220, et correspond au milieu dans lequel le rayonnement lumineux guidé par le guide d'onde 200 est confiné.

La couche gaine 220 comprend deux faces principales essentiellement parallèles dites, respectivement, face avant 220a et face arrière 220b.

Par ailleurs, le cœur 210 s'étend selon un premier axe de symétrie XX' (le premier axe de symétrie XX' est perpendiculaire au plan de la figure 4).

Par « s'étendre selon une axe de symétrie », on entend un élément qui présente généralement une forme allongée.

Le guide d'onde 200 peut présenter une épaisseur comprise entre 1 µm et 3 µm.

Il est entendu que l'épaisseur du guide d'onde 200 correspond à la distance entre les faces principales 220a et 220b. Notamment, l'épaisseur du guide d'onde 200 est associée à l'épaisseur de la couche gaine 220.

Le guide d'onde 200 peut reposer sur un substrat support 300, notamment un substrat support fait d'un matériau semi-conducteur, en particulier en silicium.

La couche gaine 220 peut comprendre du dioxyde de silicium.

Le cœur 210 peut comprendre du nitrure de silicium.

Le cœur 210 peut présenter une largeur comprise entre 100nm et 2µm.

Par « largeur du guide d'onde », on entend une dimension perpendiculaire au premier axe de symétrie et dans un plan perpendiculaire à l'une ou l'autre des deux faces principales.

Le dispositif optique 100 comprend également un actionneur 400, disposé sur l'une ou l'autre des faces avant 220a et arrière 220b, qui chevauche au moins en partie le cœur 210.

Par « chevauche au moins en partie le cœur », on entend un actionneur en regard, au moins en partie, du cœur.

L'actionneur 400 s'étend selon un second axe de symétrie YY' (le second axe de symétrie est perpendiculaire au plan de la figure 4) essentiellement parallèle au premier axe de symétrie XX'.

L'actionneur 400 présente une largeur Lₐ.

Il est entendu, sans qu'il soit nécessaire de le préciser, que la largeur Lₐ de l'actionneur 400 est mesurée selon une direction perpendiculaire au second axe de symétrie et dans un plan parallèle à la face sur laquelle il repose.

L'actionneur 400, dès lors qu'il est soumis à une tension électrique, est destiné à imposer une contrainte mécanique au niveau du cœur afin d'en modifier l'indice de réfraction.

Selon la présente invention, le second axe de symétrie YY' est décalé latéralement selon un décalage, dit décalage latéral D, par rapport à un plan de symétrie P du guide d'onde 200 comprenant le premier axe de symétrie et perpendiculaire aux faces principales de la couche gaine 220.

Plus particulièrement, le décalage latéral D est compris entre 15 % et 50% de la largeur Lₐ.

Les inventeurs ont remarqué que pour cette gamme de décalage relatif, la contrainte mécanique subie par le guide d'onde, et en particulier le cœur 210, était bien supérieure à celle observée dans le cas d'un actionneur 400 pour lequel le décalage est nul.

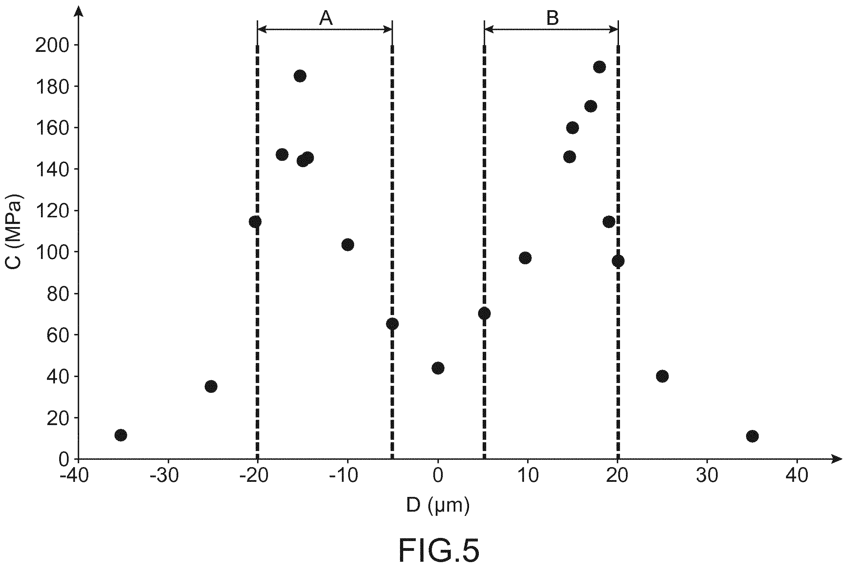

A titre d'exemple, la figure 5 est une représentation graphique, simulée par une méthode par éléments finis, de l'évolution de la contrainte mécanique imposée à un cœur 210. Pour cette simulation, le cœur 210, fait de nitrure de silicium, est enterré à une profondeur de 1 µm sous la face avant 220a de la couche gaine, et présente une épaisseur et une largeur, respectivement, de l'ordre de 300 nm et de l'ordre de 600 nm.

L'actionnaire 400 est fait de PZT et présente une largeur de l'ordre de 30 µm.

Sur la figure 5, il est alors observé, pour des décalages compris entre 5 µm et 20 µm de part et d'autre du plan de symétrie P (zones A et B repérées sur la figure 5), une contrainte mécanique bien supérieure à celle obtenue pour un décalage latérale D nul. Cet effet, inattendu et surtout contre intuitif, permet alors d'induire une variation de l'indice de réfraction du cœur 210 pour de relativement faibles tensions électriques au niveau de l'actionneur.

De manière particulièrement avantageuse, le rapport entre la largeur Lₐ et la largeur du cœur peut être compris entre 8 et 100, avantageusement entre 15 et 100, encore plus avantageusement entre 30 et 100.

Toujours de manière avantageuse, la largeur Lₐ peut être comprise entre 5 µm et 60 µm, avantageusement entre 10 µm et 60 µm, encore plus avantageusement entre 20 µm et 60 µm.

Enfin, l'actionneur 400 peut comprendre un premier matériau 410 disposé entre deux électrodes 420a et 420b destinées à soumettre le champ électrique audit actionneur 400. En particulier, le premier matériau 410 peut être fait d'un matériau piézoélectrique ou d'un matériau ferroélectrique ou d'un matériau électrostrictif.

Notamment, le premier matériau peut comprendre au moins des éléments choisi parmi : Titano-Zirconate de Plomb, nitrure d'aluminium, oxyde de zinc, poly(fluorure de vinylidène), le niobiate de lithium (LNO pour LiNbO₃), le BaTiO₃, le PbTiO₃.

L'invention concerne également un détecteur optique mettant en œuvre au moins un dispositif optique 100.

La fabrication du dispositif 100 peut être exécutée par des techniques de micro fabrication connues de l'homme du métier.

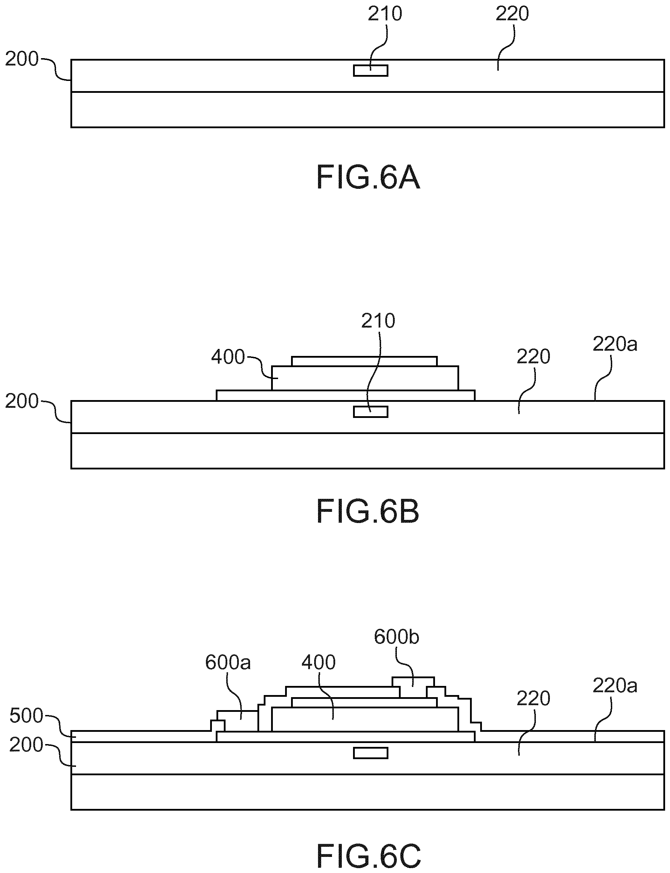

A cet égard, les figures 6a à 6c sont une représentation schématique des différentes étapes d'un procédé adapté à la formation du dispositif optique 100 selon la présente invention.

Le procédé comprend une étape a) de formation du guide d'onde 200 (figure 6a). Cette étape a) peut notamment comprendre des étapes élémentaires de formation de couches d'oxyde de silicium, de nitrure de silicium, ainsi que des étapes polissage mécano-chimique, des étapes élémentaires de gravure ou encore des étapes élémentaires de définition de motif par photolithographie.

En particulier, les étapes élémentaires relatives à l'étape a) peuvent comprendre les étapes successives suivantes :
- Formation d'une couche de SiO₂ de 2 µm;
- Formation d'une couche de Si₃N₄ de 300 nm ;
- Définition du cœur du guide d'onde par la combinaison d'une étape de photolithographie et d'une étape de gravure ;
- Formation d'une couche SiO₂ de 1 µm d'épaisseur.
- Polissage de la couche de SiO₂ pour la planariser

Le procédé comprend également une étape b) (figure 6b) de formation de l'actionneur 400 sur la face avant 220a. Cette étape b) peut notamment comprendre des étapes élémentaires de formation de couches métalliques (par exemple du Pt et/ou du Ru), une étape élémentaire de formation d'une couche du premier matériau (notamment du PZT), ainsi que des étapes élémentaires de gravure ou encore des étapes élémentaires de définition de motifs par photolithographie.

En particulier, les étapes élémentaires relatives à l'étape b) peuvent comprendre les étapes successives suivantes :
- Formation d'une couche de dioxyde de titane de 20 nm suivie de la formation d'une couche de platine de 100 nm sur le guide d'onde formé à l'étape a) ;
- Formation d'une couche de PZT de 2 µm;
- Formation d'une empilement de Ruthénium et de platine, ou d'une simple couche de platine de 100 nm ;
- Définition de l'actionneur par la combinaison d'étapes de photolithographie et de gravures, ladite définition permettant notamment de délimiter les électrodes destinées à imposer le champ électrique à l'actionneur.

Enfin, le procédé peut comprendre une étape c) de passivation et de prise de contacts du dispositif optique 100.

Notamment, l'étape c) peut comprendre une étape élémentaire de formation d'une couche de passivation 500, par exemple une couche d'oxyde de silicium de 300 nm, en recouvrement du dispositif optique 100.

L'étape élémentaire de prise de contacts est, quant à elle, destinée à former des contacts électriques 600a et 600b au niveau des électrodes formées à l'étape b).

L'étape élémentaire de prise de contact peut alors comprendre les étapes successives suivantes :
- Ouverture de contact au niveau de la couche de passivation de manière à accéder aux électrodes ;
- Formation d'un empilement de titane et d'or de 500 nm, et délimitation des contacts par une combinaison d'une étape de photolithographie avec une étape de gravure.

Le dispositif optique selon la présente invention, et susceptible d'être obtenu par le procédé de fabrication précédemment décrit, permet ainsi de résoudre le problème technique proposé dans l'état de la technique.

Notamment, la disposition relative de l'actionneur par rapport au cœur du guide d'onde permet d'exercer de plus fortes contraintes dans ledit guide d'onde et par voie de conséquences de plus fortes variations d'indice de réfraction.

### RÉFÉRENCES

[1] Acoleyen et al., "Two-Dimensional Dispersive Off-Chip Beam Scanner Fabricated on Silicon-On-Insulator", IEEE Photonics Technology Letters 23, no. 17 (September 2011): 1270-1272 ;
[2] Abiri Behrooz et al., "Electronic Two-Dimensional Beam Steering for Integrated Optical Phased Arrays" M2K.7. OSA, 2014 ;
[3] US 5383048 ;
[4] Hosseini, « Stress-optic modulator in TriPlex platform using a piezoelectric lead zirconate titanate (PZT) thin film », Optics express 14018, 01/06/2015.

## Revendications

1. Dispositif optique (100) comprenant :
- un guide d'onde (200) comprenant un cœur (210) s'étendant selon un premier axe de symétrie XX', et encapsulé dans une couche gaine (220) pourvue de deux faces principales essentiellement parallèles dites, respectivement, face avant (220a) et face arrière (220b),
- un actionneur (400) d'une largeur Lₐ, disposé sur la face avant, chevauchant au moins en partie le cœur (210), et s'étendant selon un second axe de symétrie YY' essentiellement parallèle au premier axe de symétrie XX', le second axe de symétrie YY' étant décalé latéralement selon un décalage, dit décalage latéral D, par rapport à un plan de symétrie du guide d'onde (200) comprenant le premier axe de symétrie et perpendiculaire aux faces principales de la couche gaine (220), ledit actionneur (400), dès lors qu'il est soumis à un champ électrique, est destiné à imposer une contrainte mécanique au niveau du cœur (210) afin d'en modifier l'indice de réfraction,
le dispositif étant **caractérisé en ce que** le décalage latéral D est compris entre 15 % et 50% de la largeur Lₐ.

2. Dispositif selon la revendication 1, dans lequel le rapport entre la largeur Lₐ et la largeur du cœur (210) est compris entre 8 et 100, avantageusement entre 15 et 100, encore plus avantageusement entre 30 et 100.

3. Dispositif selon la revendication 1 ou 2, dans lequel la largeur Lₐ est comprise entre 5 µm et 60 µm, avantageusement entre 10 µm et 60 µm, encore plus avantageusement entre 20 µm et 60 µm.

4. Dispositif selon l'une des revendications 1 à 3, dans lequel l'actionneur (400) comprend un premier matériau disposé entre deux électrodes destinées à soumettre ledit actionneur (400) au champ électrique, le premier matériau comprenant un matériau piézoélectrique ou un matériau ferroélectrique ou un matériau électrostrictif.

5. Dispositif selon la revendication 4, dans lequel le premier matériau comprend au moins des éléments choisi parmi : Titano-Zirconate de Plomb, nitrure d'aluminium, oxyde de zinc, poly(fluorure de vinylidène), le niobiate de lithium (LNO pour LiNbO3), le BaTiO₃, le PbTiO₃.

6. Dispositif selon l'une des revendications 1 à 5, dans lequel le guide d'onde (200) présente une épaisseur comprise entre 1 µm et 3µm.

7. Dispositif selon l'une des revendications 1 à 6, dans lequel la couche gaine (220) comprend du dioxyde de silicium.

8. Dispositif selon l'une des revendications 1 à 7, dans lequel le cœur (210) comprend du nitrure de silicium.

9. Dispositif selon l'une des revendications 1 à 8, dans lequel le guide d'onde (200) repose par sa face arrière (220b) sur un substrat support, avantageusement le substrat support comprend du silicium.

10. Détecteur optique mettant en œuvre au moins un dispositif optique (100) selon l'une des revendications 1 à 9.

## Patentansprüche

1. Optische Vorrichtung (100), enthaltend:
- einen Wellenleiter (200), der einen Kern (210) aufweist, der sich entlang einer ersten Symmetrieachse XX' erstreckt und in einer Mantelschicht (220) eingekapselt ist, die mit zwei im Wesentlichen parallelen Hauptflächen, Vorderfläche (220a) bzw. Rückfläche (220b) genannt, versehen ist,
- ein Betätigungselement (400) mit einer Breite Lₐ, das auf der Vorderfläche angeordnet ist, den Kern (210) zumindest teilweise überlappt und sich entlang einer zweiten Symmetrieachse YY' erstreckt, die im Wesentlichen parallel zur ersten Symmetrieachse XX' verläuft, wobei die zweite Symmetrieachse YY' seitlich um einen Versatz, seitlicher Versatz D genannt, in Bezug auf eine Symmetrieebene des Wellenleiters (200) versetzt ist, die die erste Symmetrieachse umfasst und senkrecht zu den Hauptflächen der Mantelschicht (220) verläuft, wobei das Betätigungselement (400), wenn es einem elektrischen Feld ausgesetzt wird, dazu bestimmt ist, den Kern (210) mit einer mechanischen Spannung zu beaufschlagen, um seinen Brechungsindex zu verändern,
wobei die Vorrichtung **dadurch gekennzeichnet ist, dass** der seitliche Versatz D zwischen 15 % und 50 % der Breite Lₐ beträgt.

2. Vorrichtung nach Anspruch 1, wobei das Verhältnis zwischen der Breite Lₐ und der Breite des Kerns (210) zwischen 8 und 100, vorteilhaft zwischen 15 und 100, noch vorteilhafter zwischen 30 und 100 liegt.

3. Vorrichtung nach Anspruch 1 oder 2, wobei die Breite Lₐ zwischen 5 µm und 60 µm, vorteilhaft zwischen 10 µm und 60 µm, noch vorteilhafter zwischen 20 µm und 60 µm liegt.

4. Vorrichtung nach einem der Ansprüche 1 bis 3, wobei das Betätigungselement (400) ein erstes Material enthält, das zwischen zwei Elektroden angeordnet ist, die dazu bestimmt sind, das Betätigungselement (400) dem elektrischen Feld auszusetzen, wobei das erste Material ein piezoelektrisches Material oder ein ferroelektrisches Material oder ein elektrostriktives Material enthält.

5. Vorrichtung nach Anspruch 4, wobei das erste Material zumindest Elemente, ausgewählt aus Blei-Titan-Zirkonat, Aluminiumnitrid, Zinkoxid, Polyvinylidenfluorid, Lithium-Niobiat (LNO für LiNbO3), BaTiO3, PbTiO3, enthält.

6. Vorrichtung nach einem der Ansprüche 1 bis 5, wobei der Wellenleiter (200) eine Dicke zwischen 1 µm und 3 µm aufweist.

7. Vorrichtung nach einem der Ansprüche 1 bis 6, wobei die Mantelschicht (220) Siliziumdioxid enthält.

8. Vorrichtung nach einem der Ansprüche 1 bis 7, wobei der Kern (210) Siliziumnitrid enthält.

9. Vorrichtung nach einem der Ansprüche 1 bis 8, wobei der Wellenleiter (200) mit seiner Rückfläche (220b) auf einem Trägersubstrat aufliegt, wobei vorteilhaft das Trägersubstrat Silizium enthält.

10. Optischer Detektor mit zumindest einer optischen Vorrichtung (100) nach einem der Ansprüche 1 bis 9.

## Claims

1. Optical device (100) comprising:
- a waveguide (200) comprising a core (210) extending along a first axis of symmetry XX', and encapsulated in a cladding layer (220) provided with two essentially parallel principal faces, called front face (220a) and back face (220b) respectively,
- an actuator (400) with width Lₐ, located on the front face and at least partly overlapping the core (210) and extending along a second axis of symmetry YY' essentially parallel to the first axis of symmetry XX', the second axis of symmetry YY' being offset laterally by an offset called lateral offset D, from a plane of symmetry of the waveguide (200) including the first axis of symmetry and perpendicular to the principal faces of the cladding layer (220), said actuator (400) is designed so that when an electric field is applied to it, it imposes a mechanical stress at the core (210) to modify its refraction index
the device being **characterised in that** the lateral offset D is between 15% and 50% of the width Lₐ.

2. Device according to claim 1, wherein the ratio between the width Lₐ and the width of the core (210) is between 8 and 100, advantageously between 15 and 100, and even more advantageously between 30 and 100.

3. Device according to claim 1 or 2, wherein the width Lₐ is between 5 µm and 60 µm, advantageously between 10 µm and 60 µm, and even more advantageously between 20 µm and 60 µm.

4. Device according to one of claims 1 to 3, wherein the actuator (400) comprises a first material placed between two electrodes that will apply the electric field to said actuator (400), the first material including a piezoelectric material or a ferroelectric material or an electrostrictive material.

5. Device according to claim 4, wherein the first material includes at least some elements chosen from among: Lead zirconate titanate, aluminium nitride, zinc oxide, polyvinylidene fluoride, lithium niobiate (LNO for LiNbO3), BaTiO3, PbTiO3.

6. Device according to one of claims 1 to 5, wherein the thickness of the waveguide is between is 1 µm and 3µm.

7. Device according to one of claims 1 to 6, wherein the cladding layer (220) comprises silicon dioxide.

8. Device according to one of claims 1 to 7, wherein the core (210) comprises silicon nitride.

9. Device according to one of claims 1 to 8, wherein the waveguide (200) rests on its back face (200) on a support substrate, advantageously the support substrate comprises silicon.

10. Optical detector making use of an optical device (100) according to claim 1 to 9.
